# FASCICULE DE BREVET EUROPEEN

(11) **EP 4 082 896 B1**
(45) Date de publication et mention de la délivrance du brevet: **15.05.2024**
(21) Numéro de dépôt: 22160283.2
(22) Date de dépôt: 04.03.2022
(51) Int. Cl.: B64C 11/00, B64C 27/82, B64D 15/00

(54) **GIRAVION MUNI D'UN SYSTÈME DE CONTRÔLE DU MOUVEMENT EN LACET AYANT UN ROTOR CARÉNÉ ET UNE PROTECTION CONTRE LE GIVRAGE**
DREHFLÜGELFLUGZEUG MIT SYSTEM ZUR KONTROLLE DER GIERBEWEGUNG, DAS EINEN STROMLINIENFÖRMIGEN ROTOR UND EINEN VEREISUNGSSCHUTZ UMFASST
ROTORCRAFT PROVIDED WITH A SYSTEM FOR CONTROLLING YAW MOVEMENT WITH A SHROUDED ROTOR AND PROTECTION AGAINST FREEZING

(30) Priorité: 28.04.2021 FR 2104434
(43) Date de publication de la demande: 02.11.2022
(73) Titulaire: Airbus Helicopters, 13725 Marignane Cedex (FR)
(72) Inventeur: SERR, Christophe, 13109 SIMIANE-COLLONGUE (FR); ANDRAL, Sébastien, 13290 LES MILLES (FR)
(74) Mandataire: GPI Brevets

(56) Documents cités:
- EP-A1- 3 136 007
- CN-A- 112 373 676
- DE-A1- 3 317 854
- FR-A1- 2 961 789
- GB-A- 626 571
- US-A1- 2018 346 135
- US-A1- 2020 122 825

## Description

La présente invention concerne un giravion muni d'un système de contrôle du mouvement en lacet ayant un rotor caréné et une protection contre le givrage. L'invention appartient ainsi au domaine technique du dégivrage des rotors de contrôle du mouvement en lacet carénés de giravion.

Usuellement, un giravion est muni d'au moins un rotor parfois dénommé « rotor principal » formant une voilure tournante.

Ce rotor principal peut être entraîné par une boîte de transmission de puissance mise en mouvement par au moins un moteur. Lors de sa rotation, le rotor principal induit un couple sur une cellule du giravion. Par conséquent, un giravion muni d'un unique rotor principal est usuellement pourvu d'un dispositif pour contrôler son mouvement en lacet.

Un tel dispositif peut comprendre un système de contrôle du mouvement en lacet agencé à l'arrière du giravion. Ce système de contrôle du mouvement en lacet exerce une poussée ayant au moins une composante transversale pour contrôler le mouvement en lacet du giravion. Dès lors, ce système de contrôle du mouvement en lacet peut comprendre un rotor et être dénommé parfois « rotor arrière » en raison de son agencement, ou encore « rotor anticouple » en raison de sa faculté à contrer le couple généré par le rotor principal sur la cellule.

Le système de contrôle du mouvement en lacet peut comprendre un rotor caréné. Un système de contrôle du mouvement en lacet caréné comporte une carène. Cette carène est une partie constitutive d'une dérive de grandes dimensions. En outre, le système de contrôle du mouvement en lacet caréné comporte un rotor de petites dimensions agencé dans cette carène. Ce rotor est pourvu d'un moyeu portant des pales disposées dans la carène. En particulier, la carène peut comprendre un convergent prolongé par un chemin de pales, puis par un divergent. La poussée générée par les pales est alors relativement faible, de l'ordre de la moitié de la poussée générée par un rotor arrière non caréné. Néanmoins, la carène génère aussi une poussée de l'ordre de la moitié de la poussée générée par un rotor arrière non caréné. Dès lors, la carène et les pales d'un rotor de contrôle du mouvement en lacet caréné génèrent conjointement une poussée totale suffisante pour contrôler le mouvement en lacet du giravion.

Les documents FR 2 719 554 et FR 1 531 536 décrivent des rotors de contrôle du mouvement en lacet carénés.

Selon un autre aspect, un giravion muni d'un système de contrôle du mouvement en lacet à rotor caréné peut parfois évoluer dans des conditions givrantes. Durant un vol en conditions givrantes, de la glace peut se déposer sur la carène, notamment au niveau du convergent et du chemin de pales. Cette glace provient des gouttelettes d'eau en surfusion, présentes dans l'air, qui viennent impacter la carène lors du déplacement du giravion et gèlent à l'impact. La glace tend alors à dégrader les performances du système de contrôle du mouvement en lacet.

Des dispositifs peuvent être agencés pour empêcher la formation de glace sur des tubes de Pitot, voire sur un parebrise, des entrées d'air moteur, des pales d'un rotor de contrôle du mouvement en lacet. Des systèmes sont parfois utilisés sur un empennage.

Un giravion peut comprendre des dispositifs de dégivrage électrothermiques agencés au sein des pales du rotor principal. Ces dispositifs sont utilisés ponctuellement pour enlever de la glace déjà formée et non pas pour empêcher la formation de glace. En effet, ces dispositifs nécessitent un prélèvement d'énergie électrique relativement important ne permettant pas une utilisation continue dans le but d'éviter la formation de glace.

L'état de l'art comporte en outre des dispositifs pour protéger l'intégralité d'une entrée d'air d'un moteur, notamment contre l'ingestion d'oiseaux ou de débris. Cependant, ces grilles peuvent comporter des moyens pour décoller la glace éventuelle afin ne pas entraver l'admission d'air du moteur en conditions givrantes. Le brevet FR 2 961 789 décrit un procédé pour éviter le colmatage d'une grille d'entrée d'air moteur.

Le document EP 3 136 007 A1 décrit un système de dégivrage/antigivrage faisant vibrer une grille.

Le document GB 626 571 décrit un système pour faire circuler de l'huile lubrifiante chauffée dans des éléments tubulaires d'une grille disposée dans une turbine à gaz.

Les documents suivants sont éloignés de la problématique de l'invention. Ainsi, le document DE 33 17 854 A1 présente un rotor non caréné protégé contre des branches par une grille. Le document CN 112 373 676 A décrit un rotor caréné muni de volets inclinables.

Les documents US 2020/122825 et US 2018/346135 A1 sont aussi connus.

La présente invention a alors pour objet de proposer un giravion comprenant un rotor de contrôle du mouvement en lacet alternatif visant à optimiser sa performance en conditions givrantes.

L'invention vise un giravion muni d'un système de contrôle du mouvement en lacet à rotor caréné, ledit système comprenant une carène et un rotor muni de pales, les pales étant disposées dans la carène et mobiles en rotation autour d'un axe de rotation du rotor, ladite carène comprenant une enveloppe délimitant une veine d'air autour de l'axe de rotation, ladite veine d'air s'étendant selon un sens de circulation de l'air au sein de la carène d'une section d'entrée vers une section de sortie.

L'expression « sens de circulation » désigne un sens selon lequel l'air traverse le rotor. Eventuellement, cet air peut traverser le rotor selon deux sens différents en fonction du cas de vol. La ou les grilles sont positionnées en amont du rotor selon un de ces sens dit « sens de circulation de l'air ». Dans ce cas, le sens de circulation peut être le sens selon lequel l'air traverse le rotor lorsque l'aéronef est en vol stationnaire.

Le giravion comporte une protection contre le givrage pour ledit système, ladite protection contre le givrage comprenant au moins une grille agencée en amont de la veine d'air selon ledit sens de circulation de l'air, ladite grille étant au regard de ladite section d'entrée et de l'enveloppe parallèlement à l'axe de rotation, aucune grille n'étant au regard d'au moins un tronçon non protégé de la section d'entrée selon une direction parallèle à l'axe de rotation.

La protection contre le givrage peut couvrir seulement partiellement la section d'entrée selon une direction parallèle à l'axe de rotation. Ainsi, un tronçon non protégé n'est pas en regard de la protection contre le givrage selon une direction parallèle à l'axe de rotation.

L'expression « étant au regard de ladite section d'entrée et de l'enveloppe parallèlement à l'axe de rotation» signifie qu'une pluralité de droites parallèles à l'axe de rotation traversent une grille et la section d'entrée. Une projection orthogonale de la grille dans un plan contenant la section d'entrée est alors superposée au moins partiellement avec une partie de la section d'entrée. Dans ce plan, la projection orthogonale de la ou le cas échéant des grilles dans un plan contenant la section d'entrée recouvre partiellement la section d'entrée. Au regard d'un individu regardant le système selon le sens de circulation de l'air, la ou les grilles sont notamment devant des portions de la section d'entrée. Par contre aucune grille n'est au regard du tronçon non protégé et donc la projection orthogonale de la ou le cas échéant des grilles et de la protection contre le givrage dans un plan contenant la section d'entrée est distincte du tronçon non protégé, à savoir ne couvre pas le tronçon non protégé. La ou les grilles peuvent ainsi s'étendre à l'extérieur de la veine d'air.

L'expression « parallèlement à l'axe de rotation » fait référence à au moins une direction parallèle à l'axe de rotation.

Dès lors, lors de l'avancement du giravion, l'air percute la ou les grilles. Dans des conditions givrantes, la ou les grilles sont impactées par des gouttelettes d'eau en surfusion, présentes dans l'air. De la glace se forme et colmate la ou les grilles. En raison du positionnement de cette ou de ces grilles, la ou les grilles tendent alors à protéger l'enveloppe et à éviter le dépôt de glace sur l'enveloppe autour de la veine d'air.

Par contre, au moins un tronçon dit « tronçon non protégé » n'est pas couvert par une grille. Dès lors, le rotor du système de contrôle du mouvement en lacet peut toujours générer une circulation d'air dans la veine d'air.

Cette protection contre le givrage va à l'encontre des préjugés exprimés dans le domaine des entrées d'air de moteur en favorisant au contraire l'accrétion de glace sur la ou les grilles, afin de protéger l'enveloppe entourant la veine d'air contre le givrage.

En outre, cette protection contre le givrage constitue un système passif ne nécessitant pas d'être alimenté électriquement, ce qui le rend compatible avec les hélicoptères munis de rotors carénés. De plus, cette protection contre le givrage est relativement légère voire relativement facile à installer.

Le giravion peut par ailleurs comporter une ou plusieurs des caractéristiques qui suivent, prises seules ou en combinaison.

Selon une possibilité, ladite au moins une grille peut s'étendre au regard d'une périphérie de ladite section d'entrée parallèlement à l'axe de rotation.

La section d'entrée comporte alors une périphérie entourant une zone centrale. Au moins une partie de la zone centrale forme le tronçon non protégé. La zone centrale est par exemple en forme de disque éventuellement centré sur l'axe de rotation. La périphérie décrit éventuellement un anneau, par exemple centré sur l'axe de rotation.

Dès lors, la zone centrale de la section d'entrée n'est pas au regard ou est partiellement au regard d'une grille, parallèlement à l'axe de rotation, ce qui permet au rotor de fonctionner dans de bonnes conditions.

Selon une possibilité compatible avec la précédente, ladite périphérie pouvant comporter selon un sens d'avancement du giravion un tronçon arrière et un tronçon avant, une grille de ladite au moins une grille est au regard au moins partiellement du tronçon avant ou du tronçon arrière parallèlement à l'axe de rotation.

Par exemple, le tronçon avant représente un demi-anneau et le tronçon arrière représente un demi-anneau. Le tronçon avant et le tronçon arrière forment alors conjointement un anneau.

Au moins une grille est alors au regard au moins d'une des sections avant ou arrière pour protéger une partie de l'enveloppe entourant le rotor.

Eventuellement, le giravion comporte deux dites grilles, lesdites deux grilles comprenant une grille avant au regard du tronçon avant et une grille arrière au regard du tronçon arrière.

Dès lors, toute la périphérie peut être protégée par des grilles.

Eventuellement, la grille avant et la grille arrière peuvent être différentes et/ou peuvent former une seule et même grille.

Il est en effet possible d'optimiser les grilles.

Par exemple, la grille avant peut s'étendre transversalement parallèlement à l'axe de rotation sur une première distance, la grille arrière peut s'étendre transversalement parallèlement à l'axe de rotation sur une deuxième distance, la deuxième distance étant inférieure à la première distance.

La grille avant qui est la première à être impactée par l'air provenant de l'avant de l'aéronef peut alors être plus grande que la grille arrière.

Selon une possibilité compatible avec les précédentes, ladite au moins une grille est bombée en présentant une face concave vers la veine d'air.

Une telle forme peut favoriser la captation de glace et la protection de l'enveloppe.

En présence de plusieurs grilles, plusieurs voire chaque grille peut présenter cette forme bombée vers l'avant.

Selon une possibilité compatible avec les précédentes, ladite au moins une grille peut être portée par une armature fixée à la carène.

L'armature peut être relativement légère pour minimiser la masse de la protection contre le givrage.

L'armature peut ne pas être au regard dudit au moins un tronçon non protégé de la section d'entrée selon une direction parallèle à l'axe de rotation.

Selon une possibilité compatible avec les précédentes, ladite au moins une grille peut être agencée frontalement au regard d'un air longeant ledit giravion et provenant d'une zone avant du giravion.

La ou les grilles sont décalées par rapport à la veine transversalement, à savoir selon l'axe de rotation du rotor, et sont alors placées dans le flux d'air provenant de l'avant du giravion. Durant un vol d'avancement, la ou les grilles peuvent alors être recouvertes de glace.

En outre, l'enveloppe peut comprendre un secteur arrière suivi d'un secteur avant selon un axe d'avancement du giravion, le secteur arrière et le secteur avant étant agencés de part et d'autre d'un plan contenant l'axe de rotation du rotor et parallèle à un axe de lacet du giravion, ladite au moins une grille est alors par exemple disposée au moins partiellement en amont du secteur arrière selon un sens allant d'une zone avant à une extrémité arrière du giravion.

Autrement dit, l'air provenant de la zone avant impacte la grille avant d'atteindre éventuellement le secteur arrière.

Selon une possibilité compatible avec les précédentes, ladite au moins une grille s'étend selon une ligne courbe, par exemple sur un arc de cercle centré ou non sur l'axe de rotation.

La ou les grilles peuvent avoir cette forme pour couvrir localement une périphérie annulaire.

Selon une possibilité compatible avec les précédentes, ladite au moins une grille peut s'étendre sur un arc de cercle, centré ou non sur l'axe de rotation, voire sur un demi-cercle.

Selon une autre possibilité, ladite section d'entrée peut comporter selon un sens d'avancement du giravion une première section prolongée par une deuxième section à partir d'un moyeu du rotor, ladite au moins une grille au regard de la première section parallèlement à l'axe de rotation.

Par exemple, la première section et la deuxième section sont symétriques au regard d'un plan passant par l'axe de rotation de ce rotor et sensiblement orthogonal à un axe antéropostérieur du giravion.

Dès lors, sensiblement la moitié arrière de la section d'entrée est couverte d'une grille.

Selon une possibilité compatible avec les précédentes, ladite enveloppe pouvant comporter un convergent prolongé par un chemin de pales entourant lesdites pales, ladite au moins une grille peut être agencée, selon une direction orientée parallèlement à l'axe de rotation, en amont d'au moins une partie du convergent, voire d'au moins une partie du chemin de pales.

La grille peut être à l'extérieur de la veine d'air et notamment à l'extérieur du convergent

Des parties de l'enveloppe usuellement susceptibles de recueillir de la glace sont alors protégées par une grille.

Outre un giravion, l'invention vise un procédé de protection contre le givre d'un système de contrôle du mouvement en lacet à rotor caréné d'un giravion, ledit système comprenant une carène et un rotor muni de pales d'un rotor, les pales étant disposées dans la carène et mobiles en rotation autour d'un axe de rotation du rotor, ladite carène comprenant une enveloppe délimitant autour l'axe de rotation une veine d'air, ladite veine d'air s'étendant selon un sens de circulation de l'air au sein de la carène d'une section d'entrée vers une section de sortie, ladite enveloppe comprenant une face interne entourant le rotor.

Ce procédé comporte l'agencement d'au moins une grille agencée en amont de la veine d'air selon le sens de circulation de l'air, ladite grille étant au regard de ladite section d'entrée et de l'enveloppe, aucune grille n'étant au regard d'au moins un tronçon non protégé de la section d'entrée selon une direction parallèle à l'axe de rotation.

L'invention et ses avantages apparaîtront avec plus de détails dans le cadre de la description qui suit avec des exemples donnés à titre illustratif en référence aux figures annexées qui représentent :
la figure 1, une vue schématique d'un giravion selon l'invention,
la figure 2, une vue en trois dimensions présentant une protection contre le givrage,
la figure 3, une coupe schématique d'une protection contre le givrage selon la figure 2,
la figure 4, une coupe d'une protection contre le givrage ayant deux grilles différentes,
la figure 5, une vue en trois dimensions présentant une protection contre le givrage,
la figure 6, une coupe schématique d'une protection contre le givrage selon la figure 5,
la figure 7, une vue en trois dimensions présentant une protection contre le givrage,
la figure 8, une coupe schématique d'une protection contre le givrage selon la figure 7,
la figure 9, une vue en trois dimensions présentant une protection contre le givrage, et
la figure 10, une coupe schématique d'une protection contre le givrage selon la figure 9.

Les éléments présents dans plusieurs figures distinctes sont affectés d'une seule et même référence.

Trois directions X, Y et Z orthogonales les unes par rapport aux autres sont représentées sur les figures.

La direction X est dite longitudinale et une autre direction Y est dite transversale. Enfin, une troisième direction Z est dite d'élévation et correspond aux dimensions en hauteur des structures décrites.

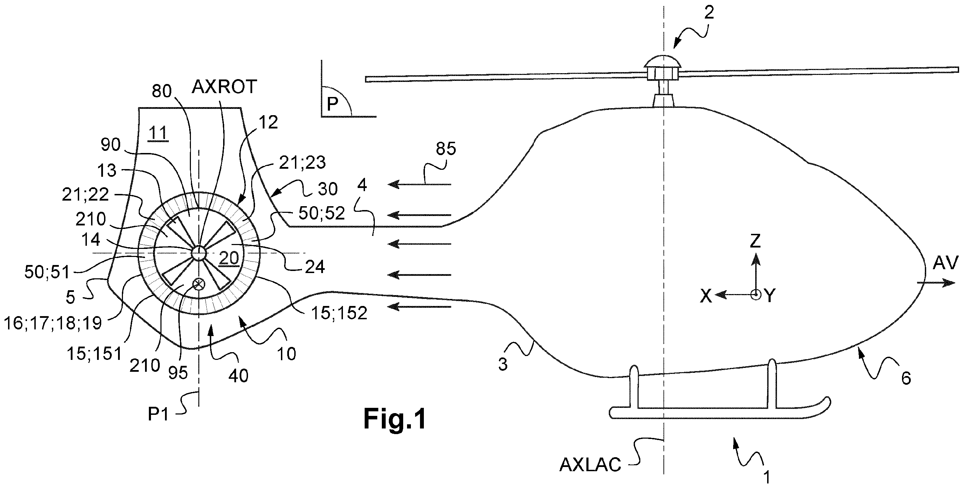

La figure 1 présente un giravion 1 selon l'invention muni d'un système 10 de contrôle du mouvement en lacet, voire d'une voilure tournante 2.

Le giravion 1 peut comprendre une cellule qui s'étend longitudinalement le long d'un plan antéropostérieur P d'une extrémité arrière 5 à une zone avant 6. En particulier, la cellule peut comprendre une section principale 3 munie de la zone avant 6 et surmontée par la voilure tournante 2. Cette section principale 3 peut être prolongée par une poutre de queue 4 portant le système 10 de contrôle du mouvement en lacet formant l'extrémité arrière 5.

Par ailleurs, le giravion 1 se déplace vers l'avant selon un sens d'avancement AV allant de l'extrémité arrière 5 vers la zone avant 6.

Indépendamment de la forme du giravion 1, le système 10 de contrôle du mouvement en lacet comporte une carène 11, portée le cas échéant par la poutre de queue 4. De plus, le système 10 de contrôle du mouvement en lacet comporte un rotor 12 dans la carène 11. En particulier, le rotor 12 comporte une pluralité de pales 13 portés par un moyeu 14. Les pales 13 effectuent conjointement un mouvement rotatif autour d'un axe de rotation AXROT.

De façon usuelle, le giravion 1 peut comprendre une installation motrice non représentée mettant en mouvement la voilure tournante 2 et/ou le rotor 12.

Plus précisément, la carène 11 comporte un carénage formant une enveloppe 15 délimitant une veine d'air 90. La veine d'air 90 et l'enveloppe 15 la délimitant s'étendent transversalement selon l'axe de rotation AXROT. L'enveloppe 15 peut présenter une symétrie de révolution par rapport à l'axe de rotation AXROT. Notamment, l'air circule dans la veine d'air 90, selon un sens 95 de circulation de l'air au sein de la carène 11, d'une section d'entrée 20 vers une section de sortie 30. Eventuellement, l'enveloppe 15 peut comporter transversalement et successivement un convergent 16, un chemin de pales 17 par exemple cylindrique puis un divergent 18. Le terme convergent désigne une partie de l'enveloppe 15 qui se rétrécit selon le sens 95 de circulation d'air alors que le terme divergent désigne au contraire une partie de l'enveloppe 15 qui s'élargit selon le sens 95 de circulation d'air. En outre, l'enveloppe 15 peut comprendre longitudinalement un secteur arrière 151 suivi d'un secteur avant 152 selon un axe d'avancement AV du giravion 1, le secteur arrière 151 et le secteur avant 152 étant agencés de part et d'autre d'un plan P1 contenant l'axe de rotation AXROT et étant parallèle à un axe de lacet AXLAC.

Dès lors, la section d'entrée 20 est délimitée par le convergent 16 et la section de sortie 30 est délimitée par le divergent 18. Les pales 13 sont disposées dans la veine d'air 90, et par exemple dans le chemin de pales 17, le moyeu 14 étant porté par un support relié à l'enveloppe 15 de manière classique par des bras. On se référera si besoin à la littérature qui décrit un tel système 10.

La section d'entrée 20 peut comprendre une périphérie 21 entourant une zone centrale 210. Selon le sens d'avancement AV du giravion 1, la périphérie 21 comporte un tronçon arrière 22 et un tronçon avant 23 disposés autour de la zone centrale 210. Par exemple le tronçon arrière 22 et le tronçon avant 23 sont symétriques par rapport au plan P1 de symétrie de l'enveloppe 15 et/ou s'étendent chacun sur un demi-cercle.

De manière innovante, le giravion 1 comporte une protection contre le givrage 40 afin d'optimiser le fonctionnement du système 10 de contrôle du mouvement en lacet dans des conditions givrantes.

Cette protection contre le givrage 40 comprend une ou plusieurs grilles 50. La référence « 50 » est utilisée pour désigner n'importe quelle grille, les références « 51, 52 » étant utilisées pour désigner des grilles particulières. Le terme « chaque » est utilisé par la suite indépendamment du nombre de grilles, à savoir en présence d'une ou de plusieurs grilles 50. Chaque grille comporte un maillage formant des ouvertures. Par exemple, chaque grille peut comprendre des fils métalliques ou autres, une tôle perforée...

Chaque grille 50 est agencée en amont de la veine d'air 90 selon le sens 95 de circulation de l'air. Autrement dit, un individu regardant une grille 50 selon une direction parallèle à l'axe de rotation AXROT noterait que la grille 50 est située devant une partie de la section d'entrée 20. Chaque grille 50 est ainsi au regard au moins de la section d'entrée 20 parallèlement à l'axe de rotation AXROT.

En outre, au moins un tronçon non protégé 24 de la section d'entrée 20 n'est pas au regard d'une grille 50, voire d'un autre organe de la protection contre le givrage 40 tel qu'une armature portant une grille par exemple. De l'air circulant selon le sens 95 de circulation d'air peut alors atteindre le tronçon non protégé 24 sans traverser de grille 50. Si la ou les grilles 50 sont colmatées par de la glace, alors de l'air peut continuer à circuler dans la veine d'air 90.

Ainsi, selon le procédé appliqué, on agence au moins une grille 50 en amont de la veine d'air 90 selon le sens 95 de circulation de l'air, en la disposant au droit de la section d'entrée 20 et de l'enveloppe 15 parallèlement à l'axe de rotation AXROT.

Eventuellement, chaque grille 50 peut être agencée, parallèlement à l'axe de rotation AXROT, en amont d'au moins une partie du convergent 16 voire d'au moins une partie du chemin de pales 17, voire du divergent 18. Eventuellement, la totalité de l'enveloppe 15 peut être protégée du givre par une ou plusieurs grilles 50. Une grille 50 peut notamment être agencée en amont du secteur arrière 151 de l'enveloppe 15 au regard d'un sens contraire au sens d'avancement AV, pour la protéger.

Sur un hélicoptère caréné classique, dans des conditions givrantes, l'air 85 provenant de la zone avant 6 du giravion lors de son déplacement, impacte l'enveloppe 15. Cet air 85 peut être chargé de gouttelettes d'eau en surfusion, et peut induire la formation de glace sur cette enveloppe 15.

Selon l'invention, dans des conditions givrantes, chaque grille 50 est impactée par des gouttelettes d'eau en surfusion, éventuellement présentes dans l'air 85. Les gouttelettes d'eau en surfusion gèlent à l'impact sur chaque grille 50. La glace ainsi formée colmate rapidement la ou les grilles 50. Dès lors, chaque grille 50 colmatée empêche ensuite des gouttelettes d'eau en surfusion, présentes dans l'air, d'atteindre les zones de l'enveloppe 15 qu'elle protège. En particulier, chaque grille 50 peut limiter l'accumulation de glace sur le convergent 16, le chemin de pales 17 voire le divergent 18 éventuels, notamment au niveau du secteur arrière 151. Chaque grille 50 permet alors d'au moins limiter les risques de création de glace sur l'enveloppe 15 délimitant la veine d'air 90. L'enveloppe 15 peut alors toujours participer au contrôle du mouvement en lacet efficacement.

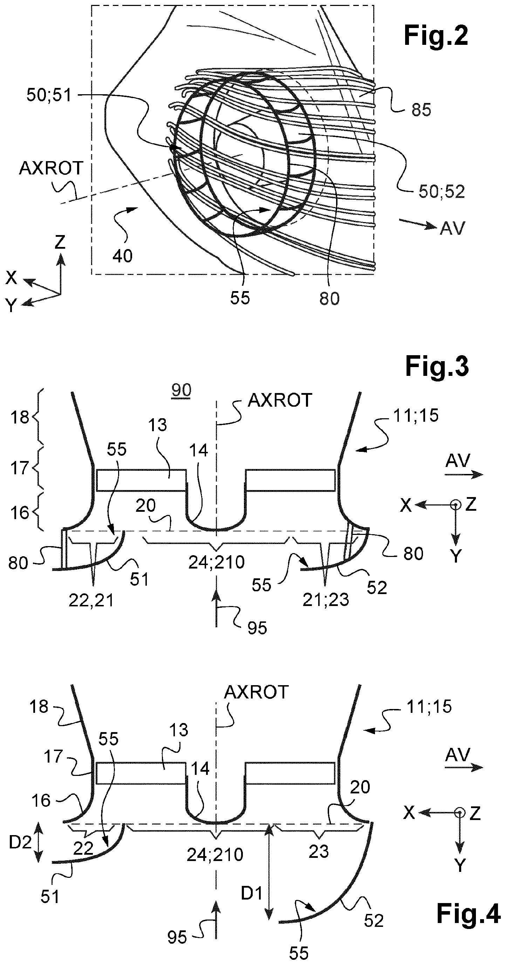

Les figures 2 à 10 présentent diverses protections contre le givrage 40.

En référence à la figure 2 et indépendamment de la réalisation de la protection contre le givrage 40, chaque grille 50 peut être fixée à une armature 80, cette armature 80 étant elle-même fixée à la carène 11.

Selon une autre caractéristique optionnelle et indépendamment de la réalisation de la protection contre le givrage 40, chaque grille 50 peut être agencée frontalement au regard de l'air 85 longeant le giravion 1 et provenant de la zone avant 6. Cet agencement permet de capter des gouttelettes d'eau en surfusion avant qu'elles impactent l'enveloppe 15.

Selon une autre caractéristique optionnelle, indépendamment de la réalisation de la protection contre le givrage 40 et telle qu'illustrée sur la figure 3 par exemple, chaque grille 50 peut être bombée en présentant une face concave 55 orientée vers la veine d'air 90. Chaque grille 50 est ainsi bombée vers la zone avant 6 pour optimiser la captation de glace.

Selon une autre caractéristique optionnelle, indépendamment de la réalisation de la protection contre le givrage 40 et telle qu'illustrée sur la figure 3 par exemple, chaque grille 50 s'étend au regard d'une périphérie 21 de ladite section d'entrée 20 parallèlement à l'axe de rotation AXROT. Un tel positionnement permet de protéger l'enveloppe 15 de la carène 11 entourant la veine d'air 90.

En particulier, chaque grille 50 peut couvrir au moins partiellement le tronçon avant 23 ou le tronçon arrière 22 de la périphérie 21 de la section d'entrée 20.

Selon les figures 2 à 4, la protection contre le givrage 40 peut comprendre deux grilles 51, 52 pour éventuellement protéger l'intégralité de l'enveloppe 15. Le tronçon non protégé 24 comporte alors la zone centrale 210.

Les deux grilles 51, 52 peuvent comprendre une grille avant 52 au regard du tronçon avant 23 et une grille arrière 51 au regard du tronçon arrière 22 de la périphérie 21 parallèlement à l'axe de rotation AXROT.

Selon la figure 3, les grilles avant 52 et arrière 51 sont différentes mais peuvent s'éloigner transversalement de la section d'entrée 20 sur une même distance.

Selon la figure 4, la grille avant 52 s'étend transversalement parallèlement à l'axe de rotation AXROT sur une première distance D1 et la grille arrière 51 s'étend transversalement parallèlement à l'axe de rotation AXROT sur une deuxième distance D2. Par contre, la deuxième distance D2 est inférieure à la première distance D1 pour favoriser la captation de glace.

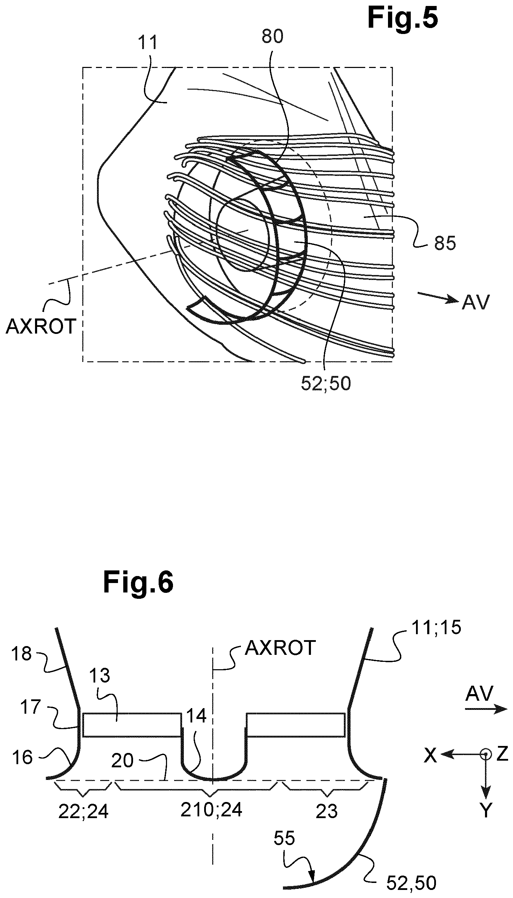

Selon les figures 5 et 6, la protection contre le givrage 40 peut comprendre une seule grille avant 52 agencée au regard du tronçon avant 23 de la périphérie 21 et du secteur avant 152 de l'enveloppe 15. Le tronçon non protégé 24 comporte alors la zone centrale 210 et le tronçon arrière 22. Eventuellement, la grille avant 52 peut couvrir une partie de la zone centrale 210. La grille avant 52 permet de capter des particules d'eau en surfusion de l'air 85 avant la section d'entrée 20.

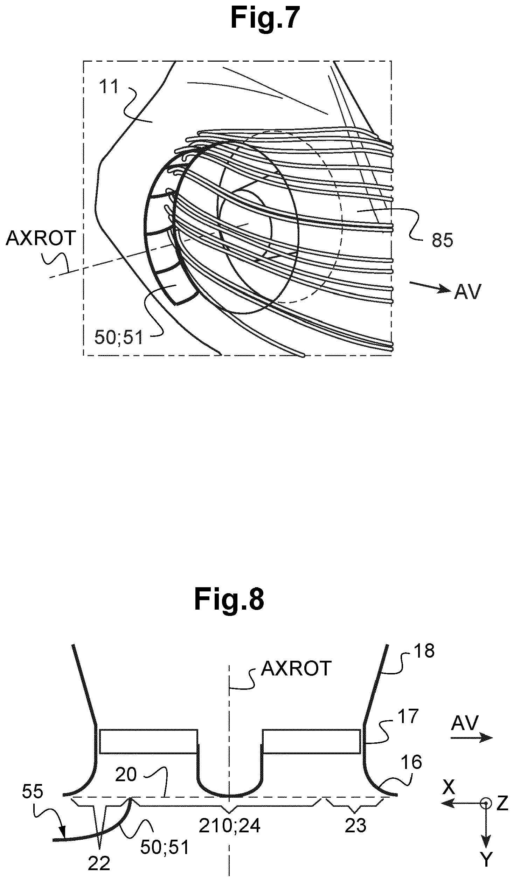

Selon les figures 7 et 8, la protection contre le givrage 40 peut comprendre une seule grille arrière 51 agencée au regard du tronçon arrière 22 de la périphérie 21. Le tronçon non protégé 24 comporte alors la zone centrale 210 et le tronçon avant 23.

En effet, les gouttelettes d'eau en surfusion de l'air 85 peuvent principalement se déposer sur le secteur arrière 151 de l'enveloppe 15, en raison du déplacement du giravion 1. Dès lors, il est envisageable de seulement positionner une grille 50 au niveau du tronçon arrière 22.

Selon les figures 1 à 8, chaque grille 51, 52 s'étend selon une ligne courbe et par exemple sur un arc de cercle éventuellement centré sur l'axe de rotation AXROT, et en particulier sur un demi-cercle. Selon des réalisations non illustrées, chaque grille 50 peut s'étendre sur un arc de cercle couvrant un secteur angulaire inférieur à 180 degrés pour couvrir partiellement le tronçon arrière 22 ou le tronçon avant 23 de la périphérie 21.

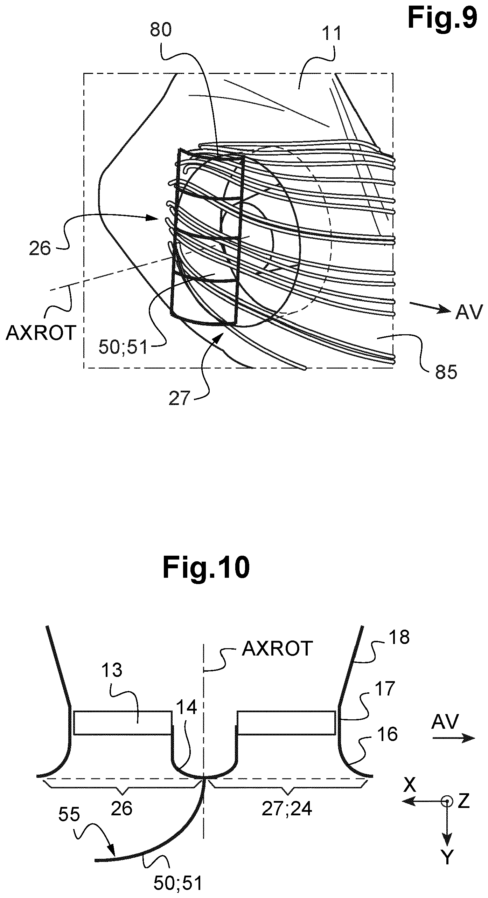

Selon les figures 9 et 10, la section d'entrée 20 comporte, selon le sens d'avancement AV, une première section 26 qui est prolongée par une deuxième section 27 à partir d'un moyeu 14 du rotor 12, une grille arrière 51 couvre alors la première section 26.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Giravion (1) muni d'un système (10) de contrôle du mouvement en lacet à rotor (12) caréné, ledit système (10) comprenant une carène (11) et un rotor (12) muni de pales (13), les pales (13) étant disposées dans la carène (11) et mobiles en rotation autour d'un axe de rotation (AXROT) du rotor (12), ladite carène (11) comprenant une enveloppe (15) délimitant une veine d'air (90) autour de l'axe de rotation (AXROT), ladite veine d'air (90) s'étendant selon un sens (95) de circulation de l'air au sein de la carène (11) d'une section d'entrée (20) vers une section de sortie (30), où le giravion (1) comporte une protection contre le givrage (40) pour ledit système (10), ladite protection contre le givrage (40) comprenant au moins une grille (51, 52) agencée en amont de la veine d'air (90) selon ledit sens (95) de circulation de l'air, ladite grille (51, 52) étant au regard de ladite section d'entrée (20) et de l'enveloppe (15) parallèlement à l'axe de rotation (AXROT), aucune grille n'étant au regard d'au moins un tronçon non protégé (24) de la section d'entrée (20) selon une direction parallèle à l'axe de rotation (AXROT).

2. Giravion selon la revendication 1, où ladite au moins une grille (51, 52) s'étend au regard d'une périphérie (21) de ladite section d'entrée (20) parallèlement à l'axe de rotation (AXROT).

3. Giravion selon la revendication 2, où ladite périphérie (21) comportant selon un sens d'avancement (AV) du giravion (1) un tronçon arrière (22) et un tronçon avant (23), une grille (51, 52) de ladite au moins une grille est au regard au moins partiellement du tronçon avant (23) ou du tronçon arrière (22) parallèlement à l'axe de rotation.

4. Giravion selon la revendication 3, où ledit giravion (1) comporte deux dites grilles (51, 52), lesdites deux grilles (51, 52) comprenant une grille avant (52) au regard du tronçon avant (23) et une grille arrière (51) au regard du tronçon arrière (22).

5. Giravion selon la revendication 4, où la grille avant (52) et la grille arrière (51) sont différentes.

6. Giravion selon la revendication 5, où la grille avant (52) s'étend transversalement parallèlement à l'axe de rotation (AXROT) sur une première distance (D1), la grille arrière (51) s'étend transversalement parallèlement à l'axe de rotation (AXROT) sur une deuxième distance (D2), la deuxième distance (D2) étant inférieure à la première distance (D1).

7. Giravion selon l'une quelconque des revendications 1 à 6, où ladite au moins une grille (51, 52) est bombée en présentant une face concave (55) vers la veine d'air (90).

8. Giravion selon l'une quelconque des revendications 1 à 7, où ladite au moins une grille (51, 52) est portée par une armature (80) fixée à la carène (11).

9. Giravion selon l'une quelconque des revendications 1 à 8, où ladite au moins une grille (51, 52) est agencée frontalement au regard d'un air (85) longeant ledit giravion (1) et provenant d'une zone avant (4) du giravion (1).

10. Giravion selon l'une quelconque des revendications 1 à 9, où l'enveloppe (15) comprenant un secteur arrière (151) suivi d'un secteur avant (152) selon un axe d'avancement (AV) du giravion, le secteur arrière (151) et le secteur avant (152) étant agencés de part et d'autre d'un plan (P1) contenant l'axe de rotation (AXROT) du rotor et parallèle à un axe de lacet (AXLAC), ladite au moins une grille est disposée au moins partiellement en amont du secteur arrière (152) selon un sens allant d'une zone avant (4) à une extrémité arrière (5) du giravion.

11. Giravion selon l'une quelconque des revendications 1 à 10, où ladite au moins une grille (51, 52) s'étend selon une ligne courbe.

12. Giravion selon la revendication 11, où ladite au moins une grille (51, 52) s'étend sur un arc de cercle.

13. Giravion selon l'une quelconque des revendications 1 à 12, où ladite section d'entrée (20) comporte selon un sens d'avancement (AV) du giravion (1) une première section (26) prolongée par une deuxième section (27) à partir d'un moyeu (14) du rotor (12), ladite au moins une grille comportant une grille (51) au regard de la première section parallèlement à l'axe de rotation.

14. Giravion selon l'une quelconque des revendications 1 à 12, où ladite enveloppe (15) comportant un convergent (16) prolongé par un chemin de pales (17) entourant lesdites pales (13), ladite au moins une grille (51, 52) est agencée, parallèlement à l'axe de rotation (AXROT), en amont d'au moins une partie du convergent (16) et d'au moins une partie du chemin de pales (17).

15. Giravion selon l'une quelconque des revendications 1 à 14, où ladite protection contre le givre (40) couvre partiellement ladite section d'entrée selon une direction parallèle à l'axe de rotation.

16. Procédé de protection contre le givre d'un système (10) de contrôle du mouvement en lacet à rotor (12) caréné d'un giravion (1), ledit système (10) comprenant une carène (11) et un rotor (12) muni de pales (13), les pales (13) étant disposées dans la carène (11) et mobiles en rotation autour d'un axe de rotation (AXROT) du rotor (12), ladite carène (11) comprenant une enveloppe (15) délimitant autour de l'axe de rotation (AXROT) une veine d'air (90), ladite veine d'air (90) s'étendant selon un sens (95) de circulation de l'air au sein de la carène (11) d'une section d'entrée (20) vers une section de sortie (30), où le procédé comporte l'agencement d'au moins une grille (51, 52) agencée en amont de la veine d'air (90) selon le sens (95) de circulation de l'air, ladite grille (51, 52) étant au regard de ladite section d'entrée (20) et de l'enveloppe (15), aucune grille n'étant au regard d'au moins un tronçon non protégé (24) de la section d'entrée (20) selon une direction parallèle à l'axe de rotation (AXROT).

## Patentansprüche

1. Drehflügelflugzeug (1), das mit einem System (10) zur Steuerung der Gierbewegung mit ummanteltem Rotor (12) versehen ist, wobei das System (10) eine Ummantelung (11) und einen mit Blättern (13) versehenen Rotor (12) umfasst, wobei die Blätter (13) in der Ummantelung (11) angeordnet und um eine Drehachse (AXROT) des Rotors (12) drehbar sind, wobei die Ummantelung (11) eine Hülle (15) umfasst, die einen Luftkanal (90) um die Drehachse (AXROT) herum begrenzt, wobei sich der Luftkanal (90) bezogen auf eine Richtung (95) der Luftströmung innerhalb der Ummantelung (11) von einem Eingangsabschnitt (20) zu einem Ausgangsabschnitt (30) erstreckt,
wobei das Drehflügelflugzeug (1) einen Vereisungsschutz (40) für das System (10) aufweist, wobei der Vereisungsschutz (40) mindestens ein Gitter (51, 52) umfasst, das bezogen auf die Richtung (95) der Luftströmung stromaufwärts des Luftkanals (90) angeordnet ist, wobei das Gitter (51, 52) dem Eingangsabschnitt (20) und der Hülle (15) parallel zur Drehachse (AXROT) gegenüberliegt, und wobei mindestens einem ungeschützten Abschnitt (24) des Eingangsabschnitts (20) in einer Richtung parallel zur Drehachse (AXROT) kein Gitter gegenüberliegt.

2. Drehflügelflugzeug nach Anspruch 1,
bei dem sich das mindestens eine Gitter (51, 52) parallel zur Drehachse (AXROT) gegenüber einem Umfang (21) des Eingangsabschnitts (20) erstreckt.

3. Drehflügelflugzeug nach Anspruch 2,
bei dem der Umfang (21) bezogen auf eine Vorwärtsbewegungsrichtung (AV) des Drehflügelflugzeugs (1) einen hinteren Abschnitt (22) und einen vorderen Abschnitt (23) umfasst, wobei ein Gitter (51, 52) des mindestens einen Gitters zumindest teilweise dem vorderen Abschnitt (23) oder dem hinteren Abschnitt (22) parallel zur Drehachse gegenüberliegt.

4. Drehflügelflugzeug nach Anspruch 3,
wobei das Drehflügelflugzeug (1) zwei der besagten Gitter (51, 52) aufweist, wobei die beiden Gitter (51, 52) ein vorderes Gitter (52) gegenüber dem vorderen Abschnitt (23) und ein hinteres Gitter (51) gegenüber dem hinteren Abschnitt (22) umfassen.

5. Drehflügelflugzeug nach Anspruch 4,
bei dem das vordere Gitter (52) und das hintere Gitter (51) unterschiedlich sind.

6. Drehflügelflugzeug nach Anspruch 5,
bei dem sich das vordere Gitter (52) quer parallel zur Drehachse (AXROT) über einen ersten Abstand (D1) erstreckt, das hintere Gitter (51) sich quer parallel zur Drehachse (AXROT) über einen zweiten Abstand (D2) erstreckt, und der zweite Abstand (D2) kleiner als der erste Abstand (D1) ist.

7. Drehflügelflugzeug nach einem der Ansprüche 1 bis 6,
bei dem das mindestens eine Gitter (51, 52) gewölbt ist, wobei es eine konkave Seite (55) in Richtung des Luftkanals (90) aufweist.

8. Drehflügelflugzeug nach einem der Ansprüche 1 bis 7,
bei dem das mindestens eine Gitter (51, 52) von einem am der Ummantelung (11) befestigten Rahmen (80) getragen ist.

9. Drehflügelflugzeug nach einem der Ansprüche 1 bis 8,
bei dem das mindestens eine Gitter (51, 52) frontal zu einem Luftstrom (85) angeordnet ist, der entlang des Drehflügelflugzeugs (1) verläuft und von einem vorderen Bereich (4) des Drehflügelflugzeugs (1) kommt.

10. Drehflügelflugzeug nach einem der Ansprüche 1 bis 9,
bei dem die Hülle (15) einen hinteren Sektor (151) umfasst, auf den entlang einer Vorwärtsbewegungsachse (AV) des Drehflügelflugzeugs ein vordere Sektor (152) folgt, wobei der hintere Sektor (151) und der vordere Sektor (152) auf beiden Seiten einer Ebene (P1) angeordnet sind, die die Drehachse (AXROT) des Rotors enthält und parallel zu einer Gierachse (AXLAC) verläuft, und das mindestens eine Gitter in einer Richtung von einem vorderen Bereich (4) zu einem hinteren Ende (5) zumindest teilweise stromaufwärts vom hinteren Sektor (152) des Drehflügelflugzeugs angeordnet ist.

11. Drehflügelflugzeug nach einem der Ansprüche 1 bis 10,
bei dem sich das mindestens eine Gitter (51, 52) entlang einer gekrümmten Linie erstreckt.

12. Drehflügelflugzeug nach Anspruch 11,
bei dem sich das mindestens eine Gitter (51, 52) auf einem Kreisbogen erstreckt.

13. Drehflügelflugzeug nach einem der Ansprüche 1 bis 12,
bei dem der Eingangsabschnitt (20) bezogen auf eine Vorwärtsbewegungsrichtung (AV) des Drehflügelflugzeugs (1) einen ersten Abschnitt (26) umfasst, der ab einer Nabe (14) des Rotors (12) durch einen zweiten Abschnitt (27) verlängert ist, wobei das mindestens eine Gitter ein Gitter (51) gegenüber dem zur Drehachse parallelen ersten Abschnitt umfasst.

14. Drehflügelflugzeug nach einem der Ansprüche 1 bis 12,
bei dem die Hülle (15) eine Konvergente (16) umfasst, die durch einen die Blätter (13) umgebenden Blattweg (17) verlängert ist, wobei das mindestens eine Gitter (51, 52) parallel zur Drehachse (AXROT) vor mindestens einem Teil der Konvergenten (16) und mindestens einem Teil des Blattweges (17) angeordnet ist.

15. Drehflügelflugzeug nach einem der Ansprüche 1 bis 14,
bei dem der Vereisungsschutz (40) den Eingangsabschnitt in einer Richtung parallel zur Drehachse teilweise bedeckt.

16. Verfahren zum Schutz vor Vereisung eines Systems (10) zur Steuerung der Gierbewegung mit ummanteltem Rotor (12) bei einem Drehflügelflugzeug (1), wobei das System (10) eine Ummantelung (11) und einen mit Blättern (13) versehenen Rotor (12) umfasst, wobei die Blätter (13) in der Ummantelung (11) angeordnet und um eine Drehachse (AXROT) des Rotors (12) drehbar sind, wobei die Ummantelung (11) eine Hülle (15) umfasst, die einen Luftkanal (90) um die Drehachse (AXROT) herum begrenzt, wobei sich der Luftkanal (90) in einer Richtung (95) der Luftströmung innerhalb der Ummantelung (11) von einem Eingangsabschnitt (20) zu einem Ausgangsabschnitt (30) erstreckt,
wobei das Verfahren das Anordnen von mindestens einem Gitter (51, 52) umfasst, das bezogen auf die Richtung (95) der Luftströmung stromaufwärts des Luftkanals (90) angeordnet ist, wobei das Gitter (51, 52) dem Eingangsabschnitt (20) und der Hülle (15) gegenüberliegt, und wobei mindestens einem ungeschützten Abschnitt (24) des Eingangsabschnitts (20) in einer Richtung parallel zur Rotationsachse (AXROT) kein Gitter gegenüberliegt.

## Claims

1. Rotorcraft (1) provided with a system (10) for controlling the yaw movement of a shrouded rotor (12), said system (10) comprising a shroud (11) and a rotor (12) provided with blades (13), the blades (13) being disposed in the shroud (11) and being free to rotate about an axis of rotation (AXROT) of the rotor (12), said shroud (11) comprising a cover (15) delimiting an air duct (90) around the axis of rotation (AXROT), said air duct (90) extending in a direction (95) of circulation of the air within the shroud (11) from an inlet section (20) towards an outlet section (30),
wherein the rotorcraft (1) comprises a frost guard (40) for said system (10), said frost guard (40) comprising at least one grid (51, 52) arranged upstream of the air duct (90) in said air circulation direction (95), said grid (51, 52) being opposite said inlet section (20) and the cover (15) parallel to the axis of rotation (AXROT), with no grid being opposite at least one unprotected section (24) of the inlet section (20) in a direction parallel to the axis of rotation (AXROT).

2. Rotorcraft according to Claim 1,
wherein said at least one grid (51, 52) extends opposite a periphery (21) of said inlet section (20) parallel to the axis of rotation (AXROT).

3. Rotorcraft according to Claim 2,
wherein said periphery (21) comprises, in a direction of travel (AV) of the rotorcraft (1), a rear section (22) and a front section (23), a grid (51, 52) of said at least one grid is at least partially opposite the front section (23) or the rear section (22) parallel to the axis of rotation.

4. Rotorcraft according to Claim 3,
wherein said rotorcraft (1) comprises two of said grids (51, 52), said two grids (51, 52) comprising a front grid (52) opposite the front section (23) and a rear grid (51) opposite the rear section (22).

5. Rotorcraft according to Claim 4,
wherein the front grid (52) and the rear grid (51) are different.

6. Rotorcraft according to Claim 5,
wherein the front grid (52) extends transversely parallel to the axis of rotation (AXROT) over a first distance (D1), the rear grid (51) extends transversely parallel to the axis of rotation (AXROT) over a second distance (D2), the second distance (D2) being less than the first distance (D1).

7. Rotorcraft according to any one of Claims 1 to 6,
wherein said at least one grid (51, 52) is domed, having a concave face (55) towards the air duct (90).

8. Rotorcraft according to any one of Claims 1 to 7,
wherein said at least one grid (51, 52) is supported by an armature (80) fixed to the shroud (11).

9. Rotorcraft according to any one of Claims 1 to 8, wherein said at least one grid (51, 52) is frontally arranged with respect to an air flow (85) flowing along said rotorcraft (1) and originating from a front zone (4) of the rotorcraft (1).

10. Rotorcraft according to any one of Claims 1 to 9,
wherein the cover (15) comprises a rear sector (151) followed by a front sector (152) along an axis of travel (AV) of the rotorcraft, the rear sector (151) and the front sector (152) being arranged on either side of a plane (P1) containing the axis of rotation (AXROT) of the rotor and parallel to a yaw axis (AXLAC), said at least one grid is disposed at least partially upstream of the rear sector (152) in a direction proceeding from a front zone (4) to a rear end (5) of the rotorcraft.

11. Rotorcraft according to any one of Claims 1 to 10,
wherein said at least one grid (51, 52) extends along a curved line.

12. Rotorcraft according to claim 11,
wherein said at least one grid (51, 52) extends over an arc of a circle.

13. Rotorcraft according to any one of Claims 1 to 12,
wherein said inlet section (20) comprises, in a direction of travel (AV) of the rotorcraft (1), a first section (26) extended by a second section (27) from a hub (14) of the rotor (12), said at least one grid comprising a grid (51) opposite the first section parallel to the axis of rotation.

14. Rotorcraft according to any one of Claims 1 to 12, wherein said cover (15) comprises a convergent part (16) extended by a blade path (17) surrounding said blades (13), said at least one grid (51, 52) is arranged, parallel to the axis of rotation (AXROT), upstream of at least part of the convergent part (16) and of at least part of the blade path (17).

15. Rotorcraft according to any one of Claims 1 to 14,
wherein said frost guard (40) partially covers said inlet section in a direction parallel to the axis of rotation.

16. Method for frost guarding a system (10) for controlling the yaw movement of a shrouded rotor (12) of a rotorcraft (1), said system (10) comprising a shroud (11) and a rotor (12) provided with blades (13), the blades (13) being disposed in the shroud (11) and being free to rotate about an axis of rotation (AXROT) of the rotor (12), said shroud (11) comprising a cover (15) delimiting an air duct (90) around the axis of rotation (AXROT), said air duct (90) extending in a direction (95) of circulation of the air within the shroud (11) from an inlet section (20) towards an outlet section (30),
wherein the method comprises arranging at least one grid (51, 52) arranged upstream of the air duct (90) in said air circulation direction (95), said grid (51, 52) being opposite said inlet section (20) and the cover (15), with no grid being opposite at least one unprotected section (24) of the inlet section (20) in a direction parallel to the axis of rotation (AXROT).
